# EUROPÄISCHE PATENTSCHRIFT

(11) **EP 4 364 262 B1**
(45) Veröffentlichungstag und Bekanntmachung des Hinweises auf die Patenterteilung: **06.08.2025**
(21) Anmeldenummer: 22737711.6
(22) Anmeldetag: 29.06.2022
(51) Int. Cl.: H02J 3/14, H02J 11/00, H02J 15/00, C25B 1/02

(54) **VERFAHREN ZUR ZUWEISUNG VON ELEKTRISCHER ENERGIE INNERHALB EINER ELEKTROLYSE-ANLAGE**
METHOD FOR ALLOCATING ELECTRICAL ENERGY WITHIN AN ELECTROLYSIS PLANT
PROCÉDÉ D'ATTRIBUTION D'ÉNERGIE ÉLECTRIQUE DANS UNE INSTALLATION D'ÉLECTROLYSE

(30) Priorität: 01.07.2021 AT 505512021
(43) Veröffentlichungstag der Anmeldung: 08.05.2024
(73) Patentinhaber: H2i GreenHydrogen GmbH, 4702 Wallern an der Trattnach (AT)
(72) Erfinder: NEUBACHER, Dietmar, 8044 Graz (AT)
(74) Vertreter: Burger, Hannes
(86) Internationale Anmeldenummer: PCT/AT2022/060230
(87) Internationale Veröffentlichungsnummer: WO 2023/272327

(56) Entgegenhaltungen:
- WO-A1-2010/048706
- US-A1- 2021 156 039

## Beschreibung

Die Erfindung betrifft ein Verfahren zur Zuweisung von elektrischer Energie innerhalb einer Elektrolyse-Anlage zur Erzeugung von Sauerstoff und Wasserstoff, wie es in den Ansprüchen angegeben ist. Das Verfahren ist für eine flexible Ausgestaltung des Prozesses der Elektrolyse zur Erzeugung von Sauerstoff und Wasserstoff bei gleichzeitig hohem Wirkungsgrad und erweiterter Lebensdauer der Einzelkomponenten der Elektrolyse-Anlage vorgesehen.

In der EP2350352B1 wird ein Verfahren zur Verteilung von elektrischer Energie an eine Vielzahl von Elektrolysegerät-Modulen gezeigt. Die Nutzbarkeit einer Elektrolyse-Anlage ist jedoch durch dieses Verfahren nur bedingt zufriedenstellen. Gattungsgemäße Verfahren sind auch aus den Dokumenten WO 2010/048706 A1 sowie US 2021/156039 A1 bekannt.

Aufgabe der vorliegenden Erfindung war es, die Nachteile des Standes der Technik zu überwinden und ein Verfahren zur Verfügung zu stellen, mittels dem die Verwendung einer Elektrolyse-Anlage hinsichtlich dessen Anwendungsspektrum erweitert und hinsichtlich der Ausgestaltung des Prozesses der Elektrolyse verbessert wird.

Diese Aufgabe wird durch ein Verfahren gemäß dem unabhängigen Anspruch 1 gelöst. Vorteilhafte Ausführungen der Erfindung sind in den abhängigen Ansprüchen angegeben.

Erfindungsgemäß ist ein Verfahren zur Zuweisung von elektrischer Energie innerhalb einer Elektrolyse-Anlage zur Erzeugung von Sauerstoff und Wasserstoff vorgesehen. Die Elektrolyse-Anlage umfasst eine System-Steuervorrichtung, zumindest zwei Verwaltungseinrichtungen, wobei die zumindest zwei Verwaltungseinrichtungen jeweils zumindest eine Verwaltungs-Steuervorrichtung und jeweils zumindest zwei Elektrolysevorrichtungen umfassen. Unter einer Verwaltungseinrichtung ist in diesem Sinne ein funktionaler Teilbereich der Elektrolyse-Anlage zu verstehen. Das Zuweisungsverfahren umfasst die folgenden Verfahrensschritte:
- Erfassen einer von einer elektrischen Versorgung bezieh- und verwertbaren Versorgungskapazität an elektrischer Energie über eine Kommunikationsschnittstelle der System-Steuervorrichtung;
- Ermitteln eines jeweiligen Soll-Betriebsbereiches für jede der zumindest zwei Verwaltungseinrichtungen durch die System-Steuervorrichtung;
- Übermitteln der bestimmungsgemäßen Soll-Betriebsbereiche an die jeweilige der zumindest zwei Verwaltungseinrichtungen;
- Ermitteln eines jeweiligen Soll-Arbeitszustands, bzw. der Soll-Arbeitszustände für jede Elektrolysevorrichtung durch die jeweilige Verwaltungs-Steuervorrichtung der jeweiligen Verwaltungseinrichtung;
- Vorgeben des bestimmungsgemäßen Soll-Arbeitszustands an die jeweilige Elektrolysevorrichtung;

Das erfindungsgemäße Verfahren ist weiters dadurch gekennzeichnet, dass die jeweilige Verwaltungs-Steuervorrichtung der zumindest zwei Verwaltungseinrichtungen mittels einer jeweiligen Zustandserfassungs-Vorrichtung Betriebskennwerte von jeder Elektrolysevorrichtung ermittelt. Aus den ermittelten Betriebskennwerten werden Rückschlüsse auf den Prozess der Elektrolyse innerhalb der Elektrolysevorrichtungen gezogen. Beispielsweise ist somit die Bestimmung des aktuellen Arbeitszustands einer Elektrolysevorrichtung ermöglicht.

Des Weiteren ermittelt die jeweilige Verwaltungs-Steuervorrichtung der zumindest zwei Verwaltungseinrichtungen, unter zu Hilfenahme der Betriebskennwerte, eine bereitstellbare Verarbeitungskapazität der Verwaltungseinrichtungen und übermittelt die bereitstellbare Verarbeitungskapazität an die System-Steuervorrichtung. Die bereitstellbare Verarbeitungskapazität stellt somit ein mögliches Vermögen an Aufnahme einer elektrischen Leistung zur Durchführung der Elektrolyse einer gesamten Verwaltungseinrichtung dar.

Die System-Steuervorrichtung führt einen Abgleich zwischen den bereitstellbaren Verarbeitungskapazitäten der zumindest zwei Verwaltungseinrichtungen und der von der elektrischen Versorgung bezieh- und verwertbaren Versorgungskapazität aus. Entsprechen beispielhaft die bereitstellbaren Verarbeitungskapazitäten der bezieh- und verwertbaren Versorgungskapazität, so ist eine mögliche Betriebsweise der Elektrolyse-Anlage, dass die vollständige bezieh- und verwertbare Versorgungskapazität entsprechend den bereitstellbaren Verarbeitungskapazitäten zum Prozess der Elektrolyse genutzt wird.

Auf Basis dieses Abgleichs der Kapazitäten und den aktuell möglichen und/oder historischen vorangegangenen Soll-Betriebsbereichen ermittelt die System-Steuervorrichtung einen angepassten Soll-Betriebsbereich für jede der zumindest zwei Verwaltungseinrichtungen und gibt die angepassten Soll-Betriebsbereiche den zumindest zwei Verwaltungseinrichtungen vor. Sodann wird jeder der zumindest zwei Verwaltungseinrichtungen die von der elektrischen Versorgung bezieh- und verwertbare elektrische Energie entsprechend dem jeweiligen Soll-Betriebsbereich mengenmäßig zugewiesen.

Jede Verwaltungs-Steuervorrichtung ermittelt auf Basis des jeweiligen angepassten Soll-Betriebsbereiches jeweils einen angepassten Soll-Arbeitszustand für die Elektrolysevorrichtungen und gibt diese Soll-Arbeitszustände den mit den jeweiligen Verwaltungseinrichtungen gekoppelten Elektrolysevorrichtungen vor. Sodann wird jeder der Elektrolysevorrichtungen von der Verwaltungs-Steuervorrichtung eine elektrische Energie entsprechend dem jeweiligen Soll-Arbeitszustand mengenmäßig zugewiesen.

Das erfindungsgemäße Verfahren bringt den überraschenden Vorteil mit sich, dass jede der zumindest zwei Verwaltungseinrichtungen in voneinander unabhängiger Weise betrieben wird und dass alle Elektrolysevorrichtungen in voneinander unabhängiger Weise betrieben werden, wobei gleichzeitig der Prozess der Elektrolyse, unabhängig von der bezieh- und verwertbaren Versorgungskapazität in einem bestmöglichen Wirkungsgradbereich durchgeführt wird. Ist beispielsweise die bezieh- und verwertbare Versorgungskapazität geringer als die bereitstellbaren Verarbeitungskapazitäten, so ist über den Abgleich zwischen den Kapazitäten die Möglichkeit geschaffen, dass die erste der zumindest zwei Versorgungseinrichtungen unter voller Ausnützung aller ihr zugewiesenen Elektrolysevorrichtungen betrieben wird, wohingegen die zweite der Versorgungseinrichtungen unter Ausnützung eines Teils der ihr zugewiesenen Elektrolysevorrichtungen betrieben wird.

Gleichermaßen entsteht durch das offenbarte Zuweisungsverfahren der vorteilhafte Effekt, dass auf Basis der Erfassungswerte der jeweiligen Zustandserfassungs-Vorrichtung einzelne Elektrolysevorrichtung hinsichtlich einer möglichst günstigen Lebensdauer betrieben werden. Dies wird durch die Ermittlung der Verarbeitungskapazität ermöglicht. Beispielhaft kann somit eine Elektrolysevorrichtung über einen definierten Zeitraum einer Über- oder Unterbeanspruchung ausgesetzt sein, wenngleich in einem darauffolgenden Arbeitszustand eine Restitution bzw. Schonung der Komponenten der Elektrolysevorrichtung eingetaktet wird. Auch kann somit eine Elektrolysevorrichtung in einen Wartungszustand während dem laufenden Betrieb der Elektrolyse-Anlage überführt werden, ohne einem weiterhin performanten Betrieb der Elektrolyse-Anlage zu schaden. Diese Möglichkeit trifft gleichermaßen auf eine gesamte Versorgungseinrichtung zu, da durch das offenbarte Verfahren ein vollständig unabhängiger Betrieb der Versorgungsvorrichtungen untereinander wie auch der Elektrolysevorrichtungen untereinander möglich ist.

Ein weiterer Vorteil des dargelegten Zuweisungsverfahrens ist, dass den Elektrolysevorrichtungen kein bestimmtes Leistungsvermögen hinsichtlich der umsetzbaren elektrischen Leistung zugrunde gelegt sein muss. Durch die Zustandserfassungs-Vorrichtung einer Versorgungsvorrichtung werden mittels der Betriebskennwerte mögliche Arbeitszustände der Elektrolysevorrichtungen ermittelbar. Weitergeführt bringt das den Vorteil mit sich, dass eine Verminderung des Leistungsvermögens hinsichtlich der umsetzbaren elektrischen Leistung einer Elektrolysevorrichtung berücksichtigt wird. Eine solche Verminderung kann beispielsweise durch prozessbedingten Verbrauch von aktiven Komponenten innerhalb einer Elektrolysevorrichtung oder durch Alterung und dergleichen auftreten. Somit ist in weiterer Folge die Sicherheit der Elektrolyse-Anlage durch das gegenständliche Zuweisungsverfahren erhöht, da eine unerwünschte Überbeanspruchung ausgeschlossen wird.

Weiters kann es zweckmäßig sein, dass die elektrische Versorgung von einem Energieerzeuger, von einer Energieerzeugungsanlage, von einer Energieerzeugungsgemeinschaft und/oder von einem Energieversorgungsdienstleister, insbesondere aus erneuerbaren Energiequellen bereitgestellt wird. Die Erzeugung von erneuerbarer Energie, beispielsweise durch Verstromung von Bio-Gas, Sonnenenergie, Wasserkraft oder Windenergie unterliegt starken Schwankungen in Bezug auf den tageszeitlichen und jahreszeitlichen Verlauf. Die Vorteile des erfindungsgemäßen Zuweisungsverfahrens kommen durch die Verwendung derartiger Quellen umso mehr zu tragen, da durch den Abgleich zwischen den bereitstellbaren Verarbeitungskapazitäten und der bezieh- und verwertbaren Versorgungskapazität auf die Schwankungen der bezieh- und verwertbaren Versorgungskapazität reagiert wird. Gleichzeitig wird die Elektrolyse-Anlage durch die Anwendung des Zuweisungsverfahrens in jedem Fall in einem für den jeweiligen Betriebspunkt optimalen Wirkungsgrad betrieben. Somit wird ein möglichst hoher Grad an Ausnutzung der erneuerbaren Energiequellen erreicht.

Darüber hinaus kann vorgesehen sein, dass der jeweilige Soll-Betriebsbereich für die zumindest zwei Verwaltungseinrichtungen wenigstens eine Betriebsweise zuzüglich eines umsetzbaren Verbrauchs an elektrischer Leistung umfasst. Von Vorteil ist hierbei, dass ein Bereitschaftsbetrieb für eine Versorgungseinrichtung vorgegeben werden kann. Vor allem im Hinblick auf eine mögliche verminderte Versorgungskapazität kann somit eine Versorgungseinrichtung in Bereitschaft gehalten oder gebracht werden, wenngleich der umsetzbare Verbrauch an elektrischer Leistung gleich Null ist. Komponenten der Elektrolyse-Anlage, die durch ein vollkommenes Stilllegen auf Grund deren chemischen Eigenschaften zur Degradation oder zur Ausbildung von Schäden neigen, sind somit durch den Bereitschaftsbetrieb schützbar.

Ferner kann vorgesehen sein, dass die System-Steuervorrichtung durch den Abgleich zwischen den bereitstellbaren Verarbeitungskapazitäten und der verwertbaren Versorgungskapazität dazu eingerichtet ist, zumindest eine Betriebsweise, insbesondere einen Spülbetrieb, einen Leerlaufbetrieb, einen Wartungsbetrieb, einen Notbetrieb, einen Anfahrbetrieb, einen Abschaltbetrieb und/oder einen Elektrolysebetrieb zu ermitteln. Hierbei ist von Vorteil, dass das Anwendungsspektrum der Elektrolyse-Anlage erweitert wird. So kann beispielsweise in vorausschauender Weise ein Spülbetrieb zur Vorbereitung der Elektrolysevorrichtungen mit anschließendem Leerlaufbetrieb vorgegeben werden. Aus dem Leerlaufbetrieb lässt sich unmittelbar ein Anfahrbetrieb und ein Betrieb mit entsprechender bezieh- und verwertbarer Versorgungskapazität, also ein Elektrolysebetrieb realisieren. Somit wird die Reaktionszeit der Elektrolyse-Anlage auf Änderungen der Versorgungskapazität entscheidend verringern. In weiterer Folge ist dadurch ein Betrieb zur Regelungsdienstleistung eines elektrischen Versorgungsnetztes in performanter Weise umsetzbar. Gleichzeitig werden durch die Möglichkeit der Vorgabe der Betriebsweise die Komponenten der Elektrolysevorrichtung in lebensdauerschonender Weise betreibbar, insbesondere wenn beispielsweise Elektrolysevorrichtungen mit Ionen-Austauschermembranen Verwendung finden.

Vorteilhaft ist auch eine Ausprägung, gemäß derer vorgesehen sein kann, dass der jeweilige Soll-Arbeitszustand für eine Elektrolysevorrichtung wenigstens einen Verbrauch an elektrischer Leistung umfasst, welche elektrische Leistung durch den Prozess der Elektrolyse verwendet wird. Vorteilhaft ist dabei, dass die Elektrolysevorrichtungen ohne jegliche Steuer- oder Regelungsvorrichtungen betrieben werden. Der jeweiligen Soll-Arbeitszustands wird von der Versorgungseinrichtung an die Elektrolysevorrichtung vorgegeben und beinhaltet bereits die elektrische Leistung, welche von der Elektrolysevorrichtung durch den Prozess der Elektrolyse umgesetzt wird. Insbesondere wird über den Soll-Arbeitszustand eine elektrische Spannung an die Elektrolysevorrichtung angelegt, wodurch eine Ziel-Produktionsmenge an Wasserstoffgas regelbar ist.

Darüber hinaus kann vorgesehen sein, dass die Betriebskennwerte als ein Parametersatz gebildet aus Messgrößen definiert sind, welcher Parametersatz zumindest die elektrischer Leistungsaufnahme, die Elektrolyt- oder Zelltemperatur, den Volumenstrom des Elektrolyten, den Druck des erzeugten Wasserstoffgases, den Druck des Elektrolyten, und/oder den Reinheitsgrad umfasst. Vorteilhaft ist dabei, dass der genaue technischer Zustand der Elektrolysevorrichtungen erkannt und beobachtbar ist. Beispielsweise können somit Wartungsintervalle bedarfsgerecht in optimaler Weise festgelegt und geplant werden, da die Notwendigkeit dazu durch die Betriebskennwerte bestimmbar ist. Gleichzeitig ist die Sicherheit der Elektrolyse-Anlage erhöht, weil das Auftreten von möglichen Fehlfunktionen durch die Möglichkeit der Zustandsüberwachung unter Einbeziehung der Betriebskennwerte frühzeitig erkannt oder sogar vorzeitig ableitbar wird. Weiters ist vorteilhaft, dass dadurch die Dynamik der Elektrolysevorrichtungen hinsichtlich Änderungen der Arbeitszustände erhöht wird und somit die gesamte Elektrolyse-Anlage in performanter Weise auf Änderungen der Versorgungskapazität reagieren kann. Anzumerken ist, dass der verwendete Begriff Elektrolyt auch Alkohole oder Reinstwasser umfasst.

In weiterer Folge ist durch die Betriebskennwerte ein digitaler Zwilling erstellbar, was weitreichende positive Folgen hat. Beispielhaft kann somit ein digitales Abbild der Anlage zu Prognose zukünftiger Betriebszustände und zur Identifikation von Anomalien im Betrieb oder von prozessbedingten Degradationen von aktiven Materialien der Elektrolysevorrichtungen herangezogen werden. Auch ist die Verwendbarkeit der Elektrolyse-Anlage somit erweitert, da Vergleiche zwischen Elektrolysevorrichtungen durchführbar sind.

Gemäß einer Weiterbildung ist es möglich, dass jede Zustandserfassungs-Vorrichtung einer Verwaltungseinrichtung zumindest jeweils einen gleichwertigen Satz an Sensoren für jede Elektrolysevorrichtung umfasst, wobei die Zustandserfassungs-Vorrichtung den Aktivitätszustand jedes Sensors vorgibt. Vorteilhaft ist dabei, dass Sensoren entsprechend deren Bedarf aktiviert oder in einen Ruhezustand versetzt werden können. Damit ist ein energiesparender Steuer- und Regelungsbetrieb der Elektrolyse-Anlage in Abstimmung auf die bezieh- und verwertbare Versorgungskapazität umsetzbar.

Ferner kann vorgesehen sein, dass von jeder Verwaltungs-Steuervorrichtung, durch eine Überwachung der Betriebskennwerte während dem Betrieb der Anlage, Zustandsmerkmale für jede Elektrolysevorrichtung ermittelt werden, welche Zustandsmerkmale wenigstens den Wirkungsgrad, den Arbeitszustand, die erwartete Restlebensdauer, das Anfahrverhalten und/oder die Leistungsreserve der jeweiligen Elektrolysevorrichtung umfassen. Vorteilhaft ist dabei, dass innerhalb der Verwaltungs-Steuervorrichtung eine Beurteilung der einzelnen Elektrolysevorrichtungen durch die Zustandsmerkmale ermöglicht ist. Somit ist die Zuweisung der elektrischen Energie innerhalb einer Versorgungseinrichtung in idealer Weise in Bezug auf die Elektrolysevorrichtungen umsetzbar. Weiters ist durch die ermittelten Zustandsmerkmale die Einsetzbarkeit von baulich unterschiedlichen Elektrolysevorrichtungen in jeweils einer Versorgungseinrichtung in verbesserter Weise umsetzbar, was in weiterer Folge die Vergleichbarkeit und Auslotbarkeit der Elektrolysevorrichtungen begünstigt. Im Zusammenspiel mit den ermittelten Betriebskennwerten ist somit auch eine verbesserte Beurteilung von Arbeitszuständen im Hinblick auf Performance und Sicherheit möglich. Beispielsweise sind Zeitintervalle für zeitlich gesteuerte Vorgänge wie Elektrolyt-Regeneration, Wartung, Austausch, Spülen, Gasblasenablösungs-Induzierung oder Aufheizen und Abkühlen besser abschätzbar.

Weiters kann von Vorteil sein, dass die Verarbeitungskapazität jeder Verwaltungseinrichtung aus von den Elektrolysevorrichtungen umsetzbaren Arbeitszuständen und Metainformationen der Elektrolysevorrichtungen von der jeweiligen Verwaltungs-Steuervorrichtung ermittelt wird. Als umsetzbare Arbeitszustände ist in diesem Zusammenhang zu verstehen, dass einzelne nicht unmittelbar zusammenhängende Arbeitszustände möglich sind, aus welchen die Verarbeitungskapazität jeder Verwaltungseinrichtung ermittelt wird. Dadurch ergibt sich der vorteilhafte Effekt, dass der Abgleich aus Verarbeitungskapazitäten und der bezieh- und verwertbaren Versorgungskapazität bereits im Hinblick auf optimale Arbeitszustände der Elektrolysevorrichtungen durchgeführt werden kann. Somit kann erweiternd dazu im Abgleich in direkter Weise auf besondere Arbeitszustände, wie beispielhaft einen Spülbetrieb oder einen Wartungsbetrieb, bereits Rücksicht genommen werden, was insgesamt die Effektivität des Zuweisungsverfahrens begünstigt, da abgleichende Steuerungsschleifen eingespart werden. Weiters werden Metainformationen der Elektrolysevorrichtungen an die System-Steuervorrichtung übermittelt, um beispielsweise ein Fehlverhalten einer Elektrolysevorrichtung frühzeitig erkennbar zu machen.

Darüber hinaus kann es von Vorteil sein, dass der bestimmungsgemäße Soll-Arbeitszustand für jede Elektrolysevorrichtung mittels einer jeweiligen Widerstandsfunktion angepasst wird, welche Widerstandsfunktion eine gewichtete Gegenmaßnahme gegen einen nachteiligen Arbeitszustand der jeweiligen Elektrolysevorrichtung bildet, insbesondere einen nachteiligen Arbeitszustand hinsichtlich Sicherheit, Wirkungsgrad und/oder Lebensdauer der jeweiligen Elektrolysevorrichtung. Daraus ergibt sich der Vorteil, dass innerhalb der Steuerung einer Elektrolysevorrichtung eine redundante Schleife im Verfahrensablauf eingeführt wird, um die Sicherheit der Elektrolyse-Anlage zu erhöhen. Gleichzeitig verbessert die Widerstandsfunktion im Abgleich mit der Versorgungs-Steuervorrichtung die Effektivität des Zuweisungsverfahrens dahingehend, als dass Soll-Arbeitszustände in verbesserter Weise für jede Elektrolysevorrichtung angepasst werden.

Ferner kann eine vorteilhafte Erweiterung des Zuweisungsverfahrens sein, dass durch die jeweilige Widerstandsfunktion ein Sperrzustand der Elektrolysevorrichtung auslösbar ist, welcher Sperrzustand die Zuweisung von elektrischer Energie unterbindet und/oder die Versorgung mit Elektrolyt beeinflusst. Somit ist es in vorteilhafter Weise möglich, dass eine einzelne Elektrolysevorrichtung aus dem Prozess der Elektrolyse ausgegliedert wird. Gleichzeitig hat das den Vorteil, dass in der restlichen Elektrolyse-Anlage von dieser Maßnahme unbescholten das Zuweisungsverfahren und damit der Betrieb weitergeführt wird. Somit ist die Sicherheit der Elektrolyse-Anlage bei gleichzeitigem Erhalt einer hohen Verfügbarkeit erhöht.

Weiters kann vorteilhaft sein, dass der bestimmungsgemäße Soll-Betriebsbereich für jede Verwaltungseinrichtung mittels einer jeweiligen Gewichtungsfunktion angepasst wird. Dabei ist die Gewichtungsfunktion als eine gewichtete Gegenmaßnahme gegen einen nachteiligen Betriebszustand der jeweiligen Verwaltungseinrichtung umgesetzt, wobei ein nachteiliger Betriebszustand insbesondere hinsichtlich Sicherheit, Wirkungsgrad und/oder Lebensdauer der jeweiligen Verwaltungseinrichtung gemeint ist. Dies hat zum Vorteil, dass jede Verwaltungseinrichtung innerhalb der jeweiligen Verwaltungs-Steuereinrichtung einer Steuer- und/oder Regelungsschleif zum Schutz und/oder zum optimierten Betrieb ihrer selbst beinhaltet. In weiterer Folge entsteht somit der vorteilhafte Effekt, dass in jeder hierarchische Ebene der Elektrolyse-Anlage die jeweiligen Steuer- und/oder Regelungsschleifen der Komponenten der Elektrolyse-Anlage nutzbar sind, was zu einer Verringerung von benötigten Rechenkapazitäten der jeweiligen Steuervorrichtungen führt. Durch die verringerten benötigten Rechenkapazitäten ist das gesamte Zuweisungsverfahren echtzeitfähig was weitreichende positive Folgen im Hinblick auf eine prädiktive und reaktionsschnelle Nutzung der Elektrolyse-Anlage mit sich bring.

Entsprechend der Erfindung ist vorgesehen, dass die Elektrolyse-Anlage zur Versorgung der zumindest zwei Verwaltungseinrichtungen wenigstens eine Wasseraufbereitung, einen Wassertank, eine Wasserversorgungseinheit, eine Druckhalte- und/oder Gasaufbereitungseinheit für Wasserstoffgas, eine Wärmetauschereinheit und/oder eine Stromwandlungseinheit umfasst, wobei diese mit der System-Steuervorrichtung gekoppelt sind. Somit ergibt sich der Vorteil, dass zusammenfassbare Versorgungsstrukturen innerhalb der Elektrolyse-Anlage in zentralisierter Weise angeordnet werden. Somit ist die Möglichkeit geschaffen, dass die Verwaltungseinrichtungen in unabhängiger Weise betreibbar sind. Dies ergibt sich vor allem durch das Zusammenwirken der System-Steuervorrichtung und der Versorgungs-Steuervorrichtung im offenbarten Zuweisungsverfahren. Die Steuervorrichtungen übernehmen jeweils einen für sich abgeschlossenen Steuerungs- und Regelungsbereich und sind voneinander unbeeinflusst betreibbar. Dies spiegelt sich in der strukturellen Ausgestaltung der Elektrolyse-Anlage wider.

Des Weiteren ist erfindungsgemäß vorgesehen, dass jede der zumindest zwei Verwaltungseinrichtung zur Versorgung der jeweils zumindest zwei Elektrolysevorrichtungen wenigstens einen Elektrolyt-Speichertank, eine Elektrolyt-Aufbereitungsvorrichtung, eine Elektrolyt-Pumpvorrichtung, eine Wärmeübertragungseinheit und/oder eine Stromverteilungseinheit umfasst, wobei diese mit der Verwaltungs-Steuervorrichtung gekoppelt sind. In jedem Fall umfasst die jeweilige Verwaltungseinrichtung die ihr zugeordnete Verwaltungs-Steuervorrichtung, die dazu eingerichtet ist, um die jeweilige Verwaltungseinrichtung zu steuern und/oder zu regeln. Durch diese mögliche Ausgestaltung ergibt sich eine abgeschlossene Elektrolytversorgung und eine in sich geschlossene Regelung und/oder Steuerung des Elektrolyseprozesses je Elektrolysevorrichtung. Dadurch wird das gegenständliche Zuweisungsverfahren dahingehend begünstigt, dass die Unabhängigkeit der Versorgungs-Steuervorrichtungen auch in der strukturellen Ausgestaltung Gewahr findet. Somit sind Arbeitszustände, besonders im Hinblick auf sicherheitstechnische Maßnahmen, in vollem Umfang durch die Versorgungs-Steuervorrichtung ausführbar. Gleichzeitig wird somit der Prozess der Elektrolyse innerhalb jeder Versorgungseinrichtung effektiv ausgestaltbar, da der Elektrolytstrom in genauerer Abstimmung an die Anforderungen der Elektrolysevorrichtungen innerhalb jeder Versorgungseinrichtung anpassbar ist. Weiters ergibt sich dadurch der Vorteil, dass die Versorgungseinrichtungen voneinander baulich unterschiedlich ausgestaltet sein können, wobei gleichzeitig das offenbarte Zuweisungsverfahren weiterhin verwendet wird, insbesondere baulich unterschiedlich in Bezug auf die Verarbeitungskapazität einer Versorgungseinrichtung.

Ferner kann vorteilhaft sein, dass mittels der Kommunikationsschnittstelle der System-Steuervorrichtung eine bidirektionale Kommunikationsverbindung mit zumindest einer weiteren Elektrolyse-Anlage, einer internetbasierten Schnittstelle und/oder einem Datenbankserver aufbaubar ist. Vorteilhaft dabei ist, dass die System-Steuervorrichtung mittels der Kommunikationsschnittstelle den Abgleich zwischen bezieh- und verwertbarer Versorgungskapazität und verwertbarer Verarbeitungskapazität in idealer Weise durchführen kann. So ist beispielsweise ein prädiktiver oder vorausschauender Abgleich durch alternative Datenquellen hinsichtlich möglicher zukünftiger Versorgungskapazität möglich. Weiters werden die Vorteile des Zuweisungsverfahrens eine Elektrolyse-Anlage dahingehend verstärkt, als dass zum Beispiel ein virtueller Zusammenschluss von mehreren Elektrolyse-Anlagen in idealer Weise und unter Ausnützung einer möglichst idealen Ausnutzung des gesamten Anlagen-Pools durch die bidirektionale Kommunikationsmöglichkeit zwischen den Teilnehmern umgesetzt wird. Auch kann im Sinne einer prädiktiven Steuerung eines Anlagen-Pools aus Teilnehmern eine einzelne Elektrolyse-Anlage einen nicht wirkungsgrad-optimalen Soll-Betriebsbereiche für eine Verwaltungs-Steuervorrichtung vorgeben, wenn daraus ein in zeitlicher Hinsicht späterer Nutzen entsteht. Beispielhaft sei dazu wiederum auf die Nutzbarkeit des Zuweisungsverfahrens der Elektrolyse-Anlage zur Regeldienstleistung angemerkt. Somit ist vor allem durch einen bedarfsgeführten Betrieb, hinsichtlich der Produktionsmenge an Wasserstoff, das Anwendungsspektrum des Zuweisungsverfahrens der Elektrolyse-Anlage auf die Versorgung von Flottenfahrzeugen, Wasserstoff-Speicher-Betankung oder Direktverbraucher in der industriellen Anwendung erweitert.

Es kann vorgesehen sein, dass die System-Steuervorrichtung dazu eingerichtet ist eine Anlagenanalyse auf Basis historischer und/oder aktueller Verarbeitungskapazitäten und/oder auf Basis von externen Daten durchzuführen, welche externen Daten von der Kommunikationsschnittstelle empfangen werden. Vorteilhaft ist dabei, dass die Anlagenanalyse im Hinblick auf einen antizipativen bzw. prädiktiven Betrieb der Elektrolyse-Anlage im Sinne einer Trendanalyse nutzbar ist. So wird ein performanter Betrieb möglich, da über eine längere Zeitdauer und auch bezogen auf eine ideale betriebswirtschaftliche Ausnützung der Elektrolyse-Anlage der Ausnutzungsgrad und somit die Wirtschaftlichkeit der Elektrolyse-Anlage erhöht ist, vor allem gegenüber einer Anlage ohne integrierte Anlagenanalyse.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung der strukturellen Ausgestaltung einer Elektrolyse-Anlage zur Anwendung des Zuweisungsverfahrens;
- Fig. 2: eine schematische Darstellung der Verfahrensschritte und Verfahrensabläufe in einer ersten Ausgestaltung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Weiters sei festgehalten, dass Begriffe aus der Bezugszeichenliste mit und/oder ohne bestimmten Index in der Beschreibung der Offenbarung verwendet werden. Sofern eine genaue Differenzierung der Begriffe hinsichtlich deren spezifischer Ausgestaltungsform nicht notwendig ist, werden keine Indizes verwendet. Im Umkehrschluss wird beispielsweise eine Elektrolysevorrichtung 5a von einer Elektrolysevorrichtung 5b entsprechend der jeweiligen Beschreibung differenziert, wobei beides weiterhin Elektrolysevorrichtungen 5 sind.

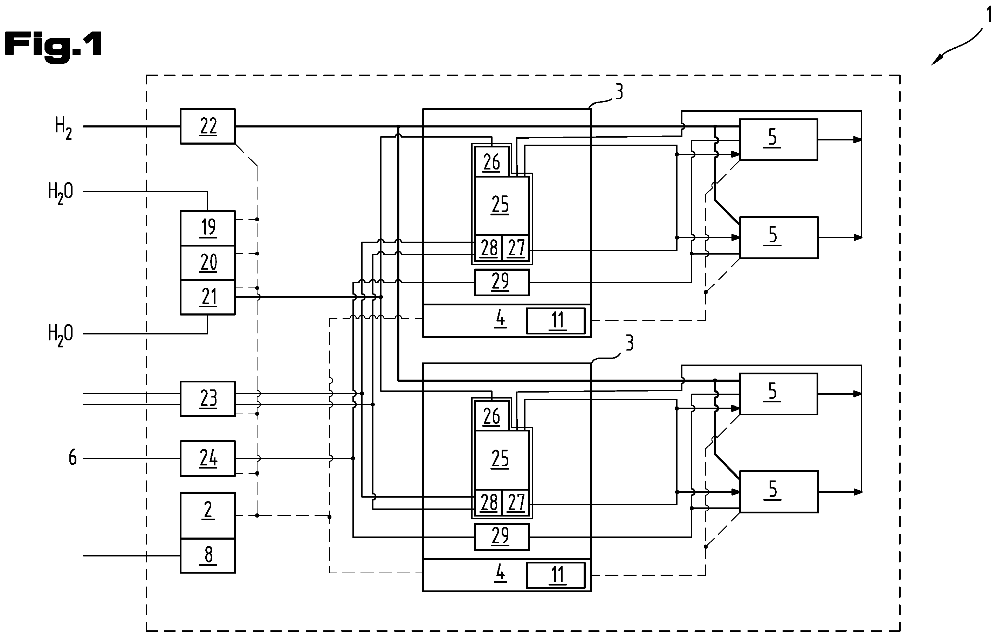

In der Fig. 1 ist eine schematische Darstellung einer möglichen und gegebenenfalls für sich eigenständigen Ausgestaltungsform einer Elektrolyse-Anlage 1 dargestellt, auf welche Elektrolyse-Anlage 1 das offenbarte Zuweisungsverfahren Anwendung finden kann. Diese Elektrolyse-Anlage 1 ist dazu eingerichtet, um mittels einer elektrischen Energie durch den elektrochemischen Prozess der Elektrolyse unter Zuhilfenahme eines Elektrolyten Sauerstoff und Wasserstoff zu erzeugen, wobei der vorrangige Zweck der Anlage die Erzeugung von Wasserstoff zur weiteren Verwendung, Speicherung oder Einspeisung in einer entsprechenden Infrastruktur ist. Die dargestellte Elektrolyse-Anlage 1 kann in eigenständiger Weise betrieben werden oder gleichermaßen innerhalb eines Zusammenschlusses aus mehreren Elektrolyse-Anlagen 1 als teilautonome Anlage betrieben werden. Die Elektrolyse-Anlage 1 dient in jedem Fall dem Zweck der Erzeugung von Wasserstoff, wobei der durch den Elektrolyseprozess gleichermaßen anfallende Sauerstoff für keine spezifische weitere Verwendung vorgesehen sein muss. Insbesondere kann die Elektrolyse-Anlage 1 zur Umwandlung von elektrischer Energie aus erneuerbaren Energien in sogenannten "grünen" Wasserstoff Verwendung finden. Es sei an dieser Stelle festgehalten, dass ob der Lesbarkeit der gebrauchte Begriff Elektrolyt, wie im Fachjargon üblich, sowohl Medien, die als Elektrolyt gelten, als auch Alkohole oder Reinstwasser umfasst.

Die dargestellte Ausgestaltung der Elektrolyse-Anlage 1 kann eine Wasseraufbereitung 19, einen Wassertank 20, eine Wasserversorgungseinheit 21, eine Druckhalte- und/oder Gasaufbereitungseinheit 22 für Wasserstoffgas, eine Wärmetauschereinheit 23 und/oder eine Stromwandlungseinheit 24 umfassen. Die genannten Komponenten können der Elektrolyse-Anlage 1 zugeordnet sein, indem diese mit der System-Steuervorrichtung 2 kommunikativ und steuer- und/oder regelungstechnisch verbunden sein können. Weiters kann die Ausgestaltung der Elektrolyse-Anlage 1 die zumindest zwei Verwaltungseinrichtungen 3 umfassen. Eine Verwaltungseinrichtung 3 kann dazu eingerichtet sein um, wie dargestellt, zumindest zwei Elektrolysevorrichtungen 5 zu versorgen. Die jeweilige Verwaltungseinrichtung 3 kann dazu einen Elektrolyt-Speichertank 25, eine Elektrolyt-Aufbereitungsvorrichtung 26, eine Elektrolyt-Pumpvorrichtung 27, eine Wärmeübertragungseinheit 28 und/oder eine Stromverteilungseinheit 29 umfassen, wobei diese alle mit der jeweiligen Verwaltungs-Steuervorrichtung 4 der Verwaltungseinrichtung 3 kommunikative und steuer- und/oder regelungstechnisch verbunden sein können. In jedem Fall ist jeweils eine Verwaltungs-Steuervorrichtung 4 einer Verwaltungseinrichtung 3 zugeordnet.

Die Elektrolyse-Anlage 1 kann somit als ein hierarchisch übergeordnetes Umsystem für die Verwaltungseinrichtungen 3 alle notwendigen Mittel zum Betrieb jeder Verwaltungseinrichtung 3 bereitstellen. In gleicher Weise kann jede Verwaltungseinrichtung 3 alle notwendigen Mittel zum Betrieb jeder Elektrolysevorrichtung 5 bereitstellen. Somit kann für jede Verwaltungseinrichtung 3 ein geschlossener Elektrolyt-Kreislauf aufgebaut werden, was die bereits oben geschilderten weitreichenden Vorteile mit sich bringt. Somit kann die Möglichkeit geschaffen sein, dass durch die Verwaltungs-Steuervorrichtung 4 jeder Verwaltungseinrichtung 3 in, von der Elektrolyse-Anlage 1 unabhängiger Weise betreibbar ist. Aus systemischer Sicht können drei hierarchische Ebenen festgelegt werden, wobei die oberste Ebene durch die Elektrolyse-Anlage 1, die mittlere Ebene durch die Verwaltungseinrichtungen 3 und die unterste Ebene durch die Elektrolysevorrichtungen 5 dargestellt werden kann. Dabei ist zu beachten, dass die Elektrolyse-Anlage 1, sowie auch jede Verwaltungseinrichtung 3, im Hinblick auf die Versorgung der jeweils hierarchisch untergeordneten Anlagen-Teilbereiche, vielmehr als ein jeweiliges Umsystem ausgestaltet werden kann.

Durch diese mögliche strukturelle Ausgestaltungsform der Elektrolyse-Anlage 1 ergeben sich im Zusammenspiel mit dem offenbarten Zuweisungsverfahren, wie in der Beschreibungseinleitung beschrieben, eine Vielzahl an vorteilhaften Effekten. Zum näheren Verständnis wird im Folgenden eine mögliche Ausgestaltung der Verfahrensschritte und Verfahrensabläufe näher erläutert.

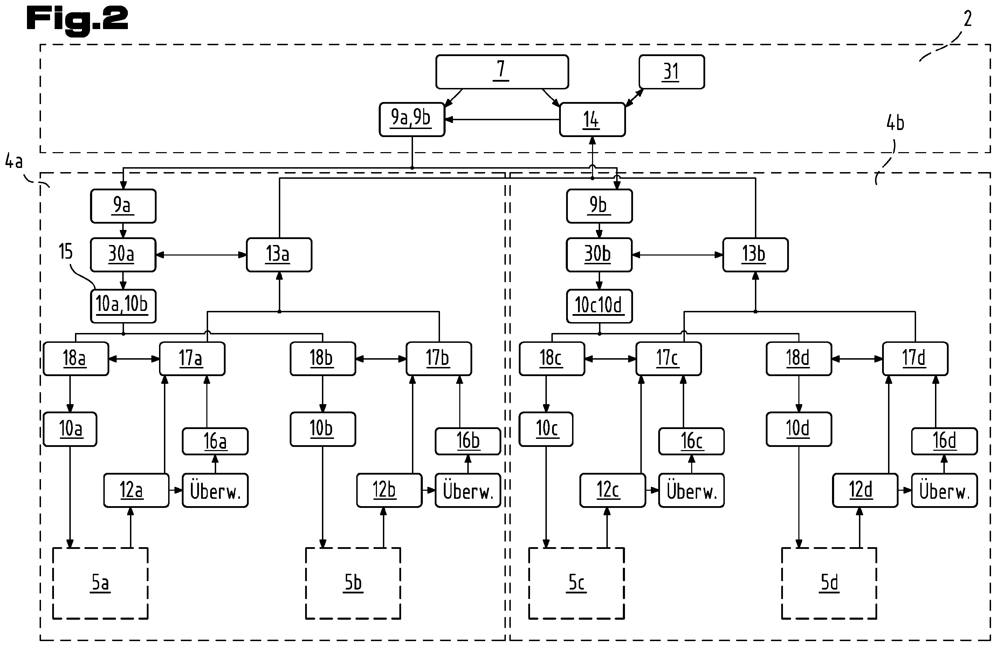

In der Fig. 2 ist eine schematische Darstellung der Verfahrensschritte und Verfahrensabläufe einer möglichen und gegebenenfalls für sich eigenständige Ausführungsform der Anlage gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die Beschreibung der vorangegangenen Fig.1 und die vorangegangene Beschreibungseinleitung hingewiesen bzw. Bezug genommen. Wie in Fig. 2 dargestellt, kann eine mögliche Ausgestaltung sein, dass das Zuweisungsverfahren in Bezug auf die System-Steuervorrichtung 2 und die Verwaltungs-Steuervorrichtung 4 in zwei hierarchischen Ebenen durchgeführt wird. Um ein besseres Verständnis des Zuweisungsverfahrens zu vermitteln wird das Verfahren vorerst von der System-Steuervorrichtung 2 ausgehend beschrieben und darauffolgend von den Elektrolysevorrichtungen 5 ausgehend erläutert.

Ausgehend von einer bezieh- und verwertbaren Versorgungskapazität 7, welche beispielhaft von einem Elektrizitätsversorgungsunternehmen bereitgestellt wird, können Betriebsbereiche 9a, 9b für die Verwaltungseinrichtungen 3a, 3b ermittelt und jeweils bestimmungsgemäß an die Verwaltung-Steuervorrichtungen 4a, 4b übermittelt werden. Entsprechend dem jeweiligen Soll-Betriebsbereich 9 wird der jeweiligen Verwaltungseinrichtung 3 die elektrische Energie zur Durchführung des Prozesses der Elektrolyse durch die ihr zugeordneten Elektrolysevorrichtungen 5 zugewiesen. Im Folgenden wird das Zuweisungsverfahren entsprechend der Fig. 2 für die Verwaltungseinrichtung 3a weiter beschrieben, wenngleich das Zuweisungsverfahren in gleicher Weise und zeitlich parallel oder auch zeitlich versetzt für jede weitere Verwaltungseinrichtung 3 Anwendung finden kann. So können basierend auf dem übermittelten Soll-Betriebsbereich 9a die Arbeitszustände 10a, 10b für die der Verwaltungseinrichtung 3a zugeordneten Elektrolysevorrichtungen 5a, 5b ermittelt werden und es kann der jeweils bestimmungsgemäße Soll-Arbeitszustand 10 an die jeweilige Elektrolysevorrichtung 5 zugewiesen werden. Der Soll-Arbeitszustand kann beispielhaft in Form einer angelegten Spannung and die Elektrolysevorrichtungen 5a vorgegeben werden.

Entsprechend der möglichen Ausgestaltung der Verfahrensschritte und Verfahrensabläufe in Fig. 2 können von der Verwaltungs-Steuervorrichtung 4 durch die Zustandserfassungs-Vorrichtung 11 Betriebskennwerte 12 von der jeweiligen Elektrolysevorrichtung 5 ermittelt werden. Durch eine zeitliche Überwachung dieser Betriebskennwerte 12 können in weiterer Folge Zustandsmerkmale 16 der jeweiligen Elektrolysevorrichtung 5 ermittelt werden. Auf Basis der Betriebskennwerte 12 und der Zustandsmerkmale 16 können durch die Verwaltungs-Steuervorrichtung 4 umsetzbare Arbeitszustände 17 ermittelt werden. Diese umsetzbaren Arbeitszustände 17 können durch vorteilhafte Zustände der jeweiligen Elektrolysevorrichtung 5 charakterisiert sein, insbesondere zum Beispiel durch vorteilhafte Zustände hinsichtlich des Wirkungsgrades oder der Lebensdauer der jeweiligen Elektrolysevorrichtung 5. Auch können beispielsweise ein Leerlaufzustand, ein Spülzustand oder andere Zustände durch die umsetzbaren Arbeitszustände 17 charakterisiert sein. In jedem Fall beinhalten die umsetzbaren Arbeitszustände 17 mehrere umsetzbare Zustände einer Elektrolysevorrichtung 5, wodurch in weiterer Folge ein Satz aus umsetzbaren Arbeitszuständen 17 entstehen kann, welche insgesamt als ein Kennfeld abbildbar sein können. Zusätzlich können die umsetzbaren Arbeitszustände 17 einer Elektrolysevorrichtung 5 Metainformationen der jeweiligen Elektrolysevorrichtung 5 enthalten. Diese Metainformationen können im Allgemeinen Auszüge aus den aktuellen und/oder historischen Betriebskennwerten 12 und/oder aus den Zustandsmerkmalen 16 sein.

Entsprechend der umsetzbaren Arbeitszustände 17 kann mittels einer Widerstandsfunktion 18 zur Beeinflussung des jeweiligen Soll-Arbeitszustands 10 einer Elektrolysevorrichtung 5 eine Steuer- und/oder Regelungsschleife aufgebaut werden. Die Widerstandsfunktion 18 kann den jeweiligen Soll-Arbeitszustand 10 einer Elektrolysevorrichtung 5 dahingehend beeinflussen, als dass der Soll-Arbeitszustand 10 abgeändert wird. Dadurch entsteht der bereits ausführlich beschriebene vorteilhafte Effekt, dass die jeweilige Elektrolysevorrichtung 5 hinsichtlich nicht vorteilhafter, schädlicher oder ungewollter Arbeitszustände schützbar wird. Gleichzeitig kann die jeweilige Verwaltungs-Steuervorrichtung 4 die umsetzbaren Arbeitszustände 17 mit der Widerstandsfunktion 18 abgleichen, wodurch in jedem Fall aktuelle umsetzbare Arbeitszustände 17 resultieren.

Die umsetzbaren Arbeitszustände 17a, 17b der Elektrolysevorrichtungen 5a, 5b können innerhalb einer Verwaltungs-Steuervorrichtung 2 eine Verarbeitungskapazität 13a der Verwaltungseinrichtung 3a bilden. Entsprechend der Zusammensetzung dieser Verarbeitungskapazität 13 kann diese des Weiteren aktuelle, mögliche oder auch historische Einheitszustände beinhalten. Als zusätzliche Steuer- und/oder Regelungsschleife innerhalb der Verwaltungs-Steuervorrichtung 4 kann eine Beeinflussung des von der System-Steuervorrichtung 2 vorgegebenen Soll-Betriebsbereiches 9a durch eine jeweilige Gewichtungsfunktion 30 vorgesehen sein. Durch diese jeweilige Gewichtungsfunktion 30 kann ein weiterer Steuer- und/oder Regelkreis innerhalb jeder Verwaltungseinrichtung 3 genutzt werden, um die jeweilige Verwaltungseinrichtung 3 performant abzustimmen. In jedem Fall kann jedoch die Verarbeitungskapazität 13 einer Verwaltungseinrichtung 3 an die System-Steuervorrichtung 2 übermittelt werden.

Die System-Steuervorrichtung 2 kann sodann auf Basis der übermittelten Verarbeitungskapazitäten 13 der jeweiligen Verwaltungseinrichtung 3 einen Abgleich 14 zwischen der bezieh- und verwertbaren Versorgungskapazität 7 und den Verarbeitungskapazitäten 13 durchführen. Als zusätzliche Information werden die bereits zuvor erwähnten Metainformationen der jeweiligen Elektrolysevorrichtungen 5 zum Abgleich 14 der System-Steuervorrichtung 2 bereitgestellt. Weiters kann eine Anlagenanalyse 31 durchgeführt werden. Der Anlagenanalyse 31 können gesammelte Informationen, vor allem auch über einen längeren Zeitraum, sowie alternative Daten, welche durch die Kommunikationsschnittstelle 8 erfassbar sind, zugrunde liegen. Somit kann die Elektrolyse-Anlage in vielfältiger Weise betrieben werden. Neben den bereits beschriebenen Betriebsmodi können somit vormals prädiktive und/oder auf einer Trendanalyse des Nutzungsverhaltens oder der Versorgungskapazität basierende Betriebsmodi umgesetzt werden. Zusammenfassen können schließlich durch den Abgleich 14 die Betriebsbereiche 9 angepasst werden. Zu erwähnen ist an dieser Stelle, dass den Verfahrensschritten und/oder den Verfahrensabläufen keine zeitlich definierte Abfolge vorgegeben sei.

Vielmehr können einzelne Verfahrensschritte und/oder Verfahrensabläufe gleichzeitig ablaufen.

Somit ist denkbar, dass eine Vielzahl an möglichen Betriebsweisen der Elektrolyse-Anlage 1 umsetzbar ist. Beispielsweise sei abermals auf die Möglichkeit eines Betriebes zur Regeldienstleistung für ein elektrisches Versorgungsnetz hingewiesen. Es ist denkbar, dass ganze Bereiche der Elektrolyse-Anlage 1, wie etwa die Verwaltungseinrichtung 3a in einen Bereitschaftsmodus versetzt werden können. Wird über die Kommunikationsschnittstelle 8 und durch eine entsprechende bezieh- und verwertbare Versorgungskapazität 7 schließlich eine Vorgabe zur Verwertung einer definierten elektrischen Energiemenge von der System-Steuervorrichtung 2 aufgenommen, so kann die im Bereitschaftsmodus befindliche Verwaltungseinrichtung 3a unmittelbar über die Übermittlung eines neuen Soll-Betriebsbereiches 9a der Prozess der Elektrolyse durch die der Verwaltungseinrichtung 3a zugewiesenen Elektrolysevorrichtungen 5a, 5b in Gang gesetzt werden. Zu diesem Ausführungsbeispiel sei angemerkt, dass im Zuweisungsverfahren und in der Kommunikation der System-Steuervorrichtung 2 mit den Verwaltungs-Steuervorrichtungen 4 keine hierarchischen Ebenen übersprungen werden. Rückbezogen auf die, in Fig. 1 schematische Darstellung der strukturellen Ausgestaltung der Elektrolyse-Anlage 1 gilt dasselbe Prinzip. Somit ist für jede Verwaltungseinrichtung 3 der Elektrolyse-Anlage 1 gewährleistet, dass jede Verwaltungseinrichtung 3 für sich in unabhängiger Weise von der jeweiligen Verwaltungs-Steuervorrichtung 4 gesteuert wird. Diese hierarchische Strukturierung kann, wie bereits hervorgehoben, weitreichende Vorteile hinsichtlich der Rechenleistung der einzelnen Steuervorrichtungen mit sich bringen. Da die Komplexität im Verfahren für jede einzelne Steuervorrichtung verringert ist, kann eine Echtzeitsteuerung in performanter Weise umgesetzt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| | | 30 | Gewichtungsfunktion |
| 1 | Elektrolyse-Anlage | 31 | Anlagenanalyse |
| 2 | System-Steuervorrichtung | | |
| 3 | Verwaltungseinrichtung | | |
| 4 | Verwaltungs-Steuervorrichtung | | |
| 5 | Elektrolysevorrichtung | | |
| 6 | elektrische Versorgung | | |
| 7 | Versorgungskapazität | | |
| 8 | Kommunikationsschnittstelle | | |
| 9 | Soll-Betriebsbereich | | |
| 10 | Soll-Arbeitszustand | | |
| 11 | Zustandserfassungs-Vorrichtung | | |
| 12 | Betriebskennwerte | | |
| 13 | Verarbeitungskapazität | | |
| 14 | Abgleich | | |
| 15 | Soll-Arbeitszustände | | |
| 16 | Zustandsmerkmale | | |
| 17 | umsetzbare Arbeitszustände | | |
| 18 | Widerstandsfunktion | | |
| 19 | Wasseraufbereitung | | |
| 20 | Wassertank | | |
| 21 | Wasserversorgungseinheit | | |
| 22 | Gasaufbereitungseinheit | | |
| 23 | Wärmetauschereinheit | | |
| 24 | Stromwandlungseinheit | | |
| 25 | Elektrolyt-Speichertank | | |
| 26 | Elektrolyt-Aufbereitungsvorrichtung | | |
| 27 | Elektrolyt-Pumpvorrichtung | | |
| 28 | Wärmeübertragungseinheit | | |
| 29 | Stromverteilungseinheit | | |

## Patentansprüche

1. Verfahren zur Zuweisung von elektrischer Energie innerhalb einer Elektrolyse-Anlage (1) zur Erzeugung von Sauerstoff und Wasserstoff, die Elektrolyse-Anlage (1) umfassend eine System-Steuervorrichtung (2), zumindest zwei Verwaltungseinrichtungen (3),
- wobei die Elektrolyse-Anlage (1) zur Versorgung der zumindest zwei Verwaltungseinrichtungen (3) wenigstens eine Wasseraufbereitung (19), einen Wassertank (20), eine Wasserversorgungseinheit (21), eine Druckhalte- und/oder Gasaufbereitungseinheit (22) für Wasserstoffgas, eine Wärmetauschereinheit (23) und/oder eine Stromwandlungseinheit (24) umfasst, wobei diese mit der System-Steuervorrichtung (2) gekoppelt sind,
- wobei die zumindest zwei Verwaltungseinrichtungen (3) jeweils zumindest eine Verwaltungs-Steuervorrichtung (4) und jeweils zumindest zwei Elektrolysevorrichtungen (5) umfassen,
- wobei jede der zumindest zwei Verwaltungseinrichtungen (3) zur Versorgung der jeweils zumindest zwei Elektrolysevorrichtungen (5) wenigstens einen Elektrolyt-Speichertank (25), eine Elektrolyt-Aufbereitungsvorrichtung (26), eine Elektrolyt-Pumpvorrichtung (27), eine Wärmeübertragungseinheit (28) und/oder eine Stromverteilungseinheit (29) umfasst, wobei diese mit der Verwaltungs-Steuervorrichtung (4) gekoppelt sind,
- wobei das Zuweisungsverfahren die folgenden Verfahrensschritte umfasst:
- Erfassen einer von einer elektrischen Versorgung (6) bezieh- und verwertbaren Versorgungskapazität (7) an elektrischer Energie über eine Kommunikationsschnittstelle (8) der System-Steuervorrichtung (2),
- Ermitteln eines jeweiligen Soll-Betriebsbereiches (9) für jede der zumindest zwei Verwaltungseinrichtungen (3) durch die System-Steuervorrichtung (2),
- Übermitteln der bestimmungsgemäßen Soll-Betriebsbereiche (9) an die jeweilige der zumindest zwei Verwaltungseinrichtungen (3),
- Ermitteln eines jeweiligen Soll-Arbeitszustands (10) für jede Elektrolysevorrichtung (5) durch die jeweilige Verwaltungs-Steuervorrichtung (4) der jeweiligen Verwaltungseinrichtung (3),
- Vorgeben des bestimmungsgemäßen Soll-Arbeitszustands (10) an die jeweilige Elektrolysevorrichtung (5),
- Ermitteln von Betriebskennwerten (12) von jeder Elektrolysevorrichtung (5) durch die jeweilige Verwaltungs-Steuervorrichtung (4) der zumindest zwei Verwaltungseinrichtungen (3) mittels einer jeweiligen Zustandserfassungs-Vorrichtung (11),
**dadurch gekennzeichnet, dass**
- die jeweilige Verwaltungs-Steuervorrichtung (4) der zumindest zwei Verwaltungseinrichtungen (3) eine bereitstellbare Verarbeitungskapazität (13) der Verwaltungseinrichtungen (3) ermittelt und an die System-Steuervorrichtung (2) übermittelt,
- die System-Steuervorrichtung (2) einen Abgleich (14) zwischen den bereitstellbaren Verarbeitungskapazitäten (13) der zumindest zwei Verwaltungseinrichtungen (3) und der von der elektrischen Versorgung bezieh- und verwertbaren Versorgungskapazität (7) ausführt,
- die System-Steuervorrichtung (2) auf Basis dieses Abgleichs (14) der Kapazitäten jeweils einen angepassten Soll-Betriebsbereich (9) für jede der zumindest zwei Verwaltungseinrichtungen (3) ermittelt und den zumindest zwei Verwaltungseinrichtungen (3) vorgibt,
- jeder der zumindest zwei Verwaltungseinrichtungen (3) die von der elektrischen Versorgung (6) bezieh- und verwertbare elektrische Energie entsprechend dem jeweiligen Soll-Betriebsbereich (9) mengenmäßig zugewiesen wird,
- jede Verwaltungs-Steuervorrichtung (4) auf Basis des jeweiligen angepassten Soll-Betriebsbereiches (9) jeweils einen angepassten Soll-Arbeitszustand (10) ermittelt und den mit den jeweiligen Verwaltungseinrichtungen (3) gekoppelten Elektrolysevorrichtungen (5) vorgibt, und dass
- jeder der Elektrolysevorrichtungen (5) eine elektrische Energie entsprechend dem jeweiligen Soll-Arbeitszustand (10) mengenmäßig zugewiesen wird.

2. Verfahren nach Anspruch 1, **dadurch gekennzeichnet, dass** die elektrische Versorgung (6) von einem Energieerzeuger, von einer Energieerzeugungsanlage, von einer Energieerzeugungsgemeinschaft und/oder von einem Energieversorgungsdienstleister, insbesondere aus erneuerbaren Energiequellen bereitgestellt wird.

3. Verfahren nach einem der vorherigen Ansprüche, **dadurch gekennzeichnet, dass** der jeweilige Soll-Betriebsbereich (9) für die zumindest zwei Verwaltungseinrichtungen (3) wenigstens eine Betriebsweise zuzüglich eines umsetzbaren Verbrauchs an elektrischer Leistung umfasst.

4. Verfahren nach einem der vorherigen Ansprüche, **dadurch gekennzeichnet, dass** die System-Steuervorrichtung (2) durch den Abgleich (14) zwischen den bereitstellbaren Verarbeitungskapazitäten (13) und der verwertbaren Versorgungskapazität (7) dazu eingerichtet ist, zumindest eine Betriebsweise, insbesondere einen Spülbetrieb, einen Leerlaufbetrieb, einen Wartungsbetrieb, einen Notbetrieb, einen Anfahrbetrieb, einen Abschaltbetrieb und/oder einen Elektrolysebetrieb zu ermitteln.

5. Verfahren nach einem der vorherigen Ansprüche, **dadurch gekennzeichnet, dass** der jeweilige Soll-Arbeitszustand (10) für eine Elektrolysevorrichtung (5) wenigstens einen Verbrauch an elektrischer Leistung umfasst, welche elektrische Leistung durch den Prozess der Elektrolyse verwendet wird.

6. Verfahren nach einem der vorherigen Ansprüche, **dadurch gekennzeichnet, dass** die Betriebskennwerte (12) als ein Parametersatz gebildet aus Messgrößen definiert sind, welcher Parametersatz zumindest die elektrische Leistungsaufnahme, die Elektrolyt- oder Zelltemperatur, den Volumenstrom des Elektrolyten, den Druck oder den Reinheitsgrad des erzeugten Wasserstoffgases, den Druck des Elektrolyten, oder die Zellenspannung umfasst.

7. Verfahren nach einem der vorherigen Ansprüche, **dadurch gekennzeichnet, dass** jede Zustandserfassungs-Vorrichtung (11) einer Verwaltungseinrichtung (3) zumindest jeweils einen gleichwertigen Satz an Sensoren für jede Elektrolysevorrichtung (5) umfasst, wobei jeder Sensor mittels der jeweiligen Zustandserfassungs-Vorrichtung (11) aktiviert oder in einen Ruhezustand versetzt wird.

8. Verfahren nach einem der vorherigen Ansprüche, **dadurch gekennzeichnet, dass** von jeder Verwaltungs-Steuervorrichtung (4), durch eine Überwachung der Betriebskennwerte (12) während dem Betrieb der Anlage, Zustandsmerkmale (16) für jede Elektrolysevorrichtung (5) ermittelt werden, welche Zustandsmerkmale (16) wenigstens den Wirkungsgrad, den Arbeitszustand, die erwartete Restlebensdauer, das Anfahrverhalten und/oder die Leistungsreserve der jeweiligen Elektrolysevorrichtung (5) umfassen.

9. Verfahren nach einem der vorherigen Ansprüche, **dadurch gekennzeichnet, dass** die Verarbeitungskapazität (13) jeder Verwaltungseinrichtung (3) aus von den Elektrolysevorrichtungen (5) umsetzbaren Arbeitszuständen (17) und Metainformationen der Elektrolysevorrichtungen (5) von der jeweiligen Verwaltungs-Steuervorrichtung (4) ermittelt wird.

10. Verfahren nach einem der vorherigen Ansprüche, **dadurch gekennzeichnet, dass** der bestimmungsgemäße Soll-Arbeitszustand (10) für jede Elektrolysevorrichtung (5) mittels einer jeweiligen Widerstandsfunktion (18) angepasst wird, welche Widerstandsfunktion (18) eine gewichtete Gegenmaßnahme gegen einen nachteiligen Arbeitszustand der jeweiligen Elektrolysevorrichtung (5) bildet, insbesondere einen nachteiligen Arbeitszustand hinsichtlich Sicherheit, Wirkungsgrad und/oder Lebensdauer der jeweiligen Elektrolysevorrichtung (5).

11. Verfahren nach Anspruch 10, **dadurch gekennzeichnet, dass** durch die jeweilige Widerstandsfunktion (18) ein Sperrzustand der Elektrolysevorrichtung (5) auslösbar ist, welcher Sperrzustand die Zuweisung von elektrischer Energie unterbindet und/oder die Versorgung mit Elektrolyt beeinflusst.

12. Verfahren nach einem der vorherigen Ansprüche, **dadurch gekennzeichnet, dass** der bestimmungsgemäße Soll-Betriebsbereich (9) für jede Verwaltungseinrichtung (3) mittels einer jeweiligen Gewichtungsfunktion (30) angepasst wird, welche Gewichtungsfunktion (30) eine gewichtete Gegenmaßnahme gegen einen nachteiligen Betriebszustand der jeweiligen Verwaltungseinrichtung (3) bildet, insbesondere einen nachteiligen Betriebszustand hinsichtlich Sicherheit, Wirkungsgrad und/oder Lebensdauer der jeweiligen Verwaltungseinrichtung (3).

13. Verfahren nach einem der vorherigen Ansprüche, **dadurch gekennzeichnet, dass** mittels der Kommunikationsschnittstelle (8) der System-Steuervorrichtung (2) eine bidirektionale Kommunikationsverbindung mit zumindest einer weiteren Elektrolyse-Anlage (1), einer internetbasierten Schnittstelle und/oder einem Datenbankserver aufbaubar ist.

14. Verfahren nach einem der vorherigen Ansprüche, **dadurch gekennzeichnet, dass** die System-Steuervorrichtung (2) eine Anlagenanalyse (31) auf Basis historischer und/oder aktueller Verarbeitungskapazitäten (13) und/oder auf Basis von externen Daten durchführt, welche externen Daten von der Kommunikationsschnittstelle (8) empfangen werden.

## Claims

1. A method for allocating electrical energy within an electrolysis plant (1) for producing oxygen and hydrogen, the electrolysis plant (1) comprising a system control device (2), at least two management apparatuses (3),
- wherein the electrolysis plant (1) comprises at least one water treatment (19), a water tank (20), a water supply unit (21), a pressurization and/or gas treatment unit (22) for hydrogen gas, a heat exchanger unit (23) and/or a power conversion unit (24) for supplying the at least two management apparatuses (3), wherein these are coupled to the system control device (2),
- the at least two management apparatuses (3) each comprising at least one management control device (4) and at least two electrolysis devices (5),
- wherein each of the at least two management apparatuses (3) for supplying the respective at least two electrolysis devices (5) comprises at least one electrolyte storage tank (25), an electrolyte preparation device (26), an electrolyte pumping device (27), a heat transfer unit (28) and/or a power distribution unit (29), wherein these are coupled to the management control device (4),
- wherein the allocation method comprises the following method steps:
- detecting a supply capacity (7) of electrical energy that can be obtained and utilized from an electrical supply (6) via a communication interface (8) of the system control device (2),
- determining a respective target operating range (9) for each of the at least two management apparatuses (3) by the system control device (2),
- transmitting the intended target operating ranges (9) to the respective one of the at least two management apparatuses (3),
- determining a respective target operating state (10) for each electrolysis device (5) by the respective management control device (4) of the respective management apparatus (3),
- specifying the intended target operating state (10) for the respective electrolysis device (5),
- determining the characteristic operating parameters (12) of each electrolysis device (5) by the respective management control device (4) of the at least two management devices (3) by means of a respective state detection device (11),
**characterized in that**
- the respective management control device (4) of the at least two management apparatuses (3) determines an available processing capacity (13) of the management apparatuses (3) and transmits it to the system control device (2),
- the system control device (2) performs a balancing (14) between the available processing capacities (13) of the at least two management apparatuses (3) and the supply capacity (7) that can be obtained from and utilized by the electrical supply,
- the system control device (2) determines an adapted target operating range (9) for each of the at least two management apparatuses (3) on the basis of this balancing (14) of the capacities and specifies it for the at least two management apparatuses (3),
- the electrical energy that can be obtained and utilized from the electrical supply (6) is allocated to each of the at least two management apparatuses (3) according to the respective target operating range (9),
- each management control device (4) determines an adapted target working state (10) on the basis of the respective adapted target operating range (9) and specifies it for the electrolysis devices (5) coupled to the respective management apparatuses (3), and that
- to each of the electrolysis devices (5) is allocated an amount of electrical energy corresponding to the respective target working state (10).

2. The method according to claim 1, **characterized in that** the electrical supply (6) is provided by an energy generating company, an energy production facility, an energy generating community and/or an energy supply service provider, in particular from renewable energy sources.

3. The method according to one of the preceding claims, **characterized in that** the respective target operating range (9) for the at least two management apparatuses (3) comprises at least one mode of operation plus a feasible consumption of electrical power.

4. The method according to one of the preceding claims, **characterized in that** the system control device (2) is configured to determine at least one operating mode, in particular a rinsing mode, an idle mode, a maintenance mode, an emergency mode, a start-up mode, a shutdown mode and/or an electrolysis mode, by balancing (14) the available processing capacities (13) and the utilizable supply capacity (7).

5. The method according to one of the preceding claims, **characterized in that** the respective target working state (10) for an electrolysis device (5) comprises at least one consumption of electrical power, which electrical power is used by the electrolysis process.

6. The method according to one of the preceding claims, **characterized in that** the characteristic operating parameters (12) are defined as a parameter set formed from measured variables, which parameter set comprises at least the electrical power consumption, the electrolyte or cell temperature, the volume flow of the electrolyte, the pressure or the degree of purity of the hydrogen gas produced, the pressure of the electrolyte, or the cell voltage.

7. The method according to one of the preceding claims, **characterized in that** each state detection device (11) of a management apparatus (3) comprises at least one equivalent set of sensors for each electrolysis device (5), wherein each sensor is activated or put into standby mode by means of the state detection device (11).

8. The method according to one of the preceding claims, **characterized in that** each management control device (4) determines state characteristics (16) for each electrolysis device (5) by monitoring the characteristic operating parameters (12) during operation of the plant, which state characteristics (16) comprise at least the efficiency, the working state, the expected remaining service life, the start-up behaviour and/or the power reserve of the respective electrolysis device (5).

9. The method according to one of the preceding claims, **characterized in that** the processing capacity (13) of each management apparatus (3) is determined from working states (17) that can be implemented by the electrolysis devices (5) and meta-information of the electrolysis devices (5) by the respective management control device (4).

10. The method according to one of the preceding claims, **characterized in that** the intended target operating state (10) for each electrolysis device (5) is adapted by means of a respective resistance function (18), which resistance function (18) forms a weighted countermeasure against a disadvantageous working state of the respective electrolysis device (5), in particular a disadvantageous working state with regard to safety, efficiency and/or service life of the respective electrolysis device (5).

11. The method according to claim 10, **characterized in that** a blocking state of the electrolysis device (5) may be activated by the respective resistance function (18), which blocking state prevents the allocation of electrical energy and/or influences the supply of electrolyte.

12. The method according to one of the preceding claims, **characterized in that** the intended target operating range (9) is adapted for each management apparatus (3) by means of a respective weighting function (30), wherein this weighting function (30) forms a weighted countermeasure against a disadvantageous operating state of the respective management apparatus (3), in particular a disadvantageous operating state with regard to safety, efficiency and/or service life of the respective management apparatus (3).

13. The method according to one of the preceding claims, **characterized in that** a bidirectional communication connection with at least one further electrolysis plant (1), an internet-based interface and/or a database server may be established by means of the communication interface (8) of the system control device (2).

14. The method according to one of the preceding claims, **characterized in that** the system control device (2) performs a plant analysis (31) on the basis of historical and/or current processing capacities (13) and/or on the basis of external data, which external data is received by the communication interface (8).

## Revendications

1. Procédé pour répartir l'énergie électrique à l'intérieur d'une installation d'électrolyse (1) destinée à produire de l'oxygène et de l'hydrogène, l'installation d'électrolyse (1) comprenant un dispositif de commande du système (2) et au moins deux dispositifs de gestion (3),
- l'installation d'électrolyse (1) comprenant, pour l'alimentation des deux dispositifs de gestion (3) au moins, au moins un dispositif de traitement de l'eau (19), un réservoir d'eau (20), une unité d'alimentation en eau (21), une unité de maintien de la pression et/ou de traitement du gaz (22) pour l'hydrogène gazeux, une unité d'échange thermique (23) et/ou une unité de conversion de courant (24), ceux-ci étant couplés au dispositif de commande du système (2),
- les deux dispositifs de gestion (3) au moins comprenant chacun au moins un dispositif de commande de gestion (4) et au moins deux dispositifs d'électrolyse (5),
- chacun des deux dispositifs de gestion (3) au moins comprenant, pour alimenter les deux dispositifs d'électrolyse (5) respectifs au moins, au moins un réservoir de stockage d'électrolyte (25), un dispositif de traitement d'électrolyte (26), un dispositif de pompage d'électrolyte (27), une unité de transfert de chaleur (28) et/ou une unité de distribution de courant (29), qui sont couplés au dispositif de commande de gestion (4),
- le procédé d'attribution comprenant les étapes suivantes :
- Détecter une capacité d'alimentation électrique pouvant être obtenue et exploitée (7) à partir d'une alimentation électrique (6) via une interface de communication (8) du dispositif de commande du système (2),
- Déterminer une plage de fonctionnement de consigne (9) respective pour chacun des deux dispositifs de gestion (3) au moins via le dispositif de commande du système (2),
- Transmettre des plages de fonctionnement de consigne (9) prévues à deux dispositifs de gestion (3) respectifs au moins,
- Déterminer un état de fonctionnement de consigne (10) respectif pour chaque dispositif d'électrolyse (5) via le dispositif de commande de gestion (4) respectif du dispositif de gestion (3) respectif,
- Prédéfinir l'état de fonctionnement de consigne (10) au niveau de chaque dispositif d'électrolyse (5),
- Déterminer des paramètres de fonctionnement (12) de chaque dispositif d'électrolyse (5) via le dispositif de commande de gestion (4) respectif des deux dispositifs de gestion (3) au moins à l'aide d'un dispositif de détection d'état (11)
**caractérisé en ce que**
- le dispositif de commande de gestion (4) respectif des deux dispositifs de gestion (3) au moins détermine une capacité de traitement disponible (13) des dispositifs de gestion (3) et la transmet au dispositif de commande du système (2),
- le dispositif de commande du système (2) effectue une comparaison (14) entre les capacités de traitement disponibles (13) des deux dispositifs de gestion (3) au moins et la capacité d'alimentation électrique pouvant être obtenue et exploitée (7) par l'alimentation électrique et le dispositif de commande du système (2) détermine, sur la base de cette comparaison (14) des capacités, une plage de fonctionnement de consigne (9) adaptée pour chacun des deux dispositifs de gestion (3) au moins et la prescrit aux deux dispositifs de gestion (3) au moins,
- chacun des deux dispositifs de gestion (3) au moins se voit attribuer la quantité d'énergie électrique pouvant être obtenue et exploitée à partir de l'alimentation électrique (6) en fonction de la plage de fonctionnement de consigne (9) respective,
- chaque dispositif de commande de gestion (4) détermine, sur la base de la plage de fonctionnement de consigne adaptée respective (9), un état de fonctionnement de consigne adapté (10) et le transmet aux dispositifs d'électrolyse (5) couplés aux dispositifs de gestion respectifs (3), et que
- chaque dispositif d'électrolyse (5) se voit attribuer une quantité d'énergie électrique correspondant à l'état de fonctionnement de consigne (10) respectif.

2. Procédé selon la revendication 1, **caractérisé en ce que** l'alimentation électrique (6) est fournie par un producteur d'énergie, une installation de production d'énergie, une communauté de production d'énergie et/ou un fournisseur de services d'approvisionnement en énergie, en particulier à partir de sources d'énergie renouvelables.

3. Procédé selon l'une des revendications précédentes, **caractérisé en ce que** la plage de fonctionnement de consigne (9) respective pour les deux dispositifs de gestion (3) au moins comprend au moins un mode de fonctionnement plus une consommation d'énergie électrique réalisable.

4. Procédé selon l'une des revendications précédentes, **caractérisé en ce que** le dispositif de commande du système (2) est conçu, grâce à la comparaison (14) entre les capacités de traitement disponibles (13) et la capacité d'alimentation pouvant être exploitée (7), pour déterminer au moins un mode de fonctionnement, en particulier un mode de rinçage, un mode de fonctionnement à vide, un mode de maintenance, un mode de secours, un mode de démarrage, un mode d'arrêt et/ou un mode d'électrolyse.

5. Procédé selon l'une des revendications précédentes, **caractérisé en ce que** l'état de fonctionnement de consigne (10) respectif pour un dispositif d'électrolyse (5) comprend au moins une consommation d'énergie électrique, laquelle énergie électrique est utilisée par le processus d'électrolyse.

6. Procédé selon l'une des revendications précédentes, **caractérisé en ce que** les paramètres de fonctionnement (12) sont définis comme un ensemble de paramètres formé à partir de grandeurs mesurées, lequel ensemble de paramètres comprend au moins la puissance électrique absorbée, la température de l'électrolyte ou de la cellule, le débit volumique de l'électrolyte, la pression ou le degré de pureté de l'hydrogène gazeux produit, la pression de l'électrolyte ou la tension de la cellule.

7. Procédé selon l'une des revendications précédentes, **caractérisé en ce que** chaque dispositif de détection d'état (11) d'un dispositif de gestion (3) comprend au moins un ensemble équivalent de capteurs pour chaque dispositif d'électrolyse (5), chaque capteur étant activé ou mis au repos au moyen du dispositif de détection d'état (11) respectif.

8. Procédé selon l'une des revendications précédentes, **caractérisé en ce que** chaque dispositif de commande de gestion (4), par une surveillance des paramètres de fonctionnement (12) pendant le fonctionnement de l'installation, détermine des caractéristiques d'état (16) pour chaque dispositif d'électrolyse (5), lesquelles caractéristiques d'état (16) comprennent au moins le rendement, l'état de fonctionnement, la durée de vie restante prévue, le comportement au démarrage et/ou la réserve de puissance du dispositif d'électrolyse (5) respectif.

9. Procédé selon l'une des revendications précédentes, **caractérisé en ce que** la capacité de traitement (13) de chaque dispositif de gestion (3) est déterminée à partir des états de fonctionnement (17) convertibles par les dispositifs d'électrolyse (5) et des méta-informations des dispositifs d'électrolyse (5) par le dispositif de commande de gestion (4) respectif.

10. Procédé selon l'une des revendications précédentes, **caractérisé en ce que** l'état de fonctionnement de consigne (10) prévu pour chaque dispositif d'électrolyse (5) est adapté au moyen d'une fonction de résistance respective (18), laquelle fonction de résistance (18) constitue une contre-mesure pondérée contre un état de fonctionnement défavorable du dispositif d'électrolyse (5) respectif, en particulier un état de fonctionnement défavorable en termes de sécurité, de rendement et/ou de durée de vie du dispositif d'électrolyse (5) respectif.

11. Procédé selon la revendication 10, **caractérisé en ce que** la fonction de résistance respective (18) permet de déclencher un état de blocage du dispositif d'électrolyse (5), lequel état de blocage empêche l'attribution d'énergie électrique et/ou influence l'alimentation en électrolyte.

12. Procédé selon l'une des revendications précédentes, **caractérisé en ce que** la plage de fonctionnement de consigne (9) prévue pour chaque dispositif de gestion (3) est adaptée au moyen d'une fonction de pondération respective (30), laquelle fonction de pondération (30) constitue une contre-mesure pondérée contre un état de fonctionnement défavorable du dispositif de gestion respectif (3), en particulier un état de fonctionnement défavorable en termes de sécurité, de rendement et/ou de durée de vie du dispositif de gestion respectif (3).

13. Procédé selon l'une des revendications précédentes, **caractérisé en ce qu'**une liaison de communication bidirectionnelle peut être établie au moyen de l'interface de communication (8) du dispositif de commande du système (2) avec au moins une autre installation d'électrolyse (1), une interface basée sur Internet et/ou un serveur de base de données.

14. Procédé selon l'une des revendications précédentes, **caractérisé en ce que** le dispositif de commande du système (2) effectue une analyse de l'installation (31) sur la base des capacités de traitement historiques et/ou actuelles (13) et/ou sur la base de données externes qui sont reçues par l'interface de communication (8).
